# EUROPEAN PATENT APPLICATION

(11) **EP 4 475 404 A1**
(43) Date of publication of application: **11.12.2024**
(21) Application number: 22941000.6
(22) Date of filing: 07.05.2022
(51) Int. Cl.: H02K 9/19

(54) **HOUSING STRUCTURE OF ELECTRIC DRIVE ASSEMBLY, AND ELECTRIC DRIVE ASSEMBLY**

(71) Applicant: Jing-Jin Electric Technologies Co., Ltd., Beijing 100015 (CN)
(72) Inventor: YU, Ping, Beijing 100015 (CN); ZHANG, Zhenjun, Beijing 100015 (CN); SUO, Zhihai, Beijing 100015 (CN); DUAN, Chaoshuai, Beijing 100015 (CN); WU, Bin, Beijing 100015 (CN); SHI, Zhe, Beijing 100015 (CN)
(74) Representative: Kleine, Hubertus
(86) International application number: PCT/CN2022/091492
(87) International publication number: WO 2023/216031

(57) **Abstract**

A housing structure of an electric drive assembly and an electric drive assembly are provided. The housing structure comprises a motor housing (1), a reducer housing (2), a controller housing (3), an oil cooling assembly, and a water cooling assembly. At least two housings of the motor housing (1), the reducer housing (2), and the controller housing (3) are in an integrated structure. The oil cooling assembly comprises an oil pumping unit and an oil passage, the oil passage is provided inside the motor housing (1) and inside the reducer housing (2), the oil pumping unit is communicated with the oil passage and conveys lubricating oil in the reducer housing (2) to the oil passage. The water cooling assembly comprises a water passage which is a circulating water channel provided inside the controller housing (3) and inside the motor housing (1), and the water passage is connected to a cooling water source of a vehicle. This housing structure can reduce the weight of the electric drive assembly and improve its stiffness, and has advantages of good NVH (Noise, Vibration, and Noise) performance as well as high cooling and lubrication efficiency.

## Description

### TECHNICAL FIELD

The present disclosure belongs to the technical field of electric drive assembly, and particularly relates to a housing structure of an electric drive assembly and an electric drive assembly.

### BACKGROUND

With the rapid development of the automobile manufacturing industry, the vibration and noise level of the power system of new energy vehicles has become an important technical indicator of the quality of modern automobile manufacturing. The vibration and noise of an electric drive system is mainly related to the mode of the system itself, and the mode of the system itself is related to the structure of the system. In other words, main factors affecting the vibration noise index of the electric drive system are electromagnetic design and structural design, such as motor electromagnetic noise, gear order noise, and housing mode. For new energy electric drive systems, the key to improving vibration and noise performance lies in how to reduce noise levels of the factors. The electromagnetic high-frequency noise and gear order noise are limited by the required target performance, so the effect of reducing noise levels from the internal structure of hardware is limited.

### SUMMARY

With respect to the above problems, the present disclosure provides a housing structure of an electric drive assembly and an electric drive assembly to overcome or at least partially solve the above problems.

In order to achieve the above object, the present disclosure adopts the following technical solutions.

An aspect of the present disclosure provides a housing structure of an electric drive assembly, which comprises a motor housing, a reducer housing, a controller housing, an oil cooling assembly, and a water cooling assembly;
at least two housings of the motor housing, the reducer housing, and the controller housing are in an integrated structure;
the oil cooling assembly comprises an oil pumping unit and an oil passage, the oil passage is provided inside the motor housing and inside the reducer housing, the oil pumping unit is communicated with the oil passage and conveys lubricating oil in the reducer housing to the oil passage;
the water cooling assembly comprises a water passage which is a circulating water channel provided inside the controller housing and inside the motor housing, and the water passage is connected to a cooling water source of a vehicle.

Further, the motor housing, the reducer housing, and the controller housing are in an integrated structure;
the controller housing is located above the motor housing, and the reducer housing is located on a power output side of the motor housing.

Further, the oil passage comprises several oil sub-passages; oil outlet positions of the oil sub-passages correspond respectively to parts to be cooled and parts to be lubricated inside the motor housing as well as parts to be cooled and parts to be lubricated inside the reducer housing.

Further, the water passage comprises a first water passage provided at a bottom and/or a side wall of the controller housing, and a second water passage provided between the motor housing and a motor water jacket, and the first water passage and the second water passage are connected by a connecting water passage.

Further, the cooling water inside the cooling water source flows back to the cooling water source through the first water passage, the connecting water passage, and the second water passage in sequence.

Further, the first water passage is formed by a water tank provided at the bottom of the controller housing and a sealing plate provided on the water tank.

Further, the oil cooling assembly further comprises a heat exchange unit;
the oil passage and the water passage are both communicated with the heat exchange unit, and heat exchange between the lubricating oil in the oil passage and the cooling water in the water passage is achieved by means of the heat exchange unit.

Further, the housing structure further comprises an oil filtering assembly;
the oil filtering assembly is located at a bottom of a reducer housing, the oil pumping unit is communicated with the reducer housing through the oil filtering assembly, and the oil filtering assembly is used for filtering lubricating oil.

Further, the oil pumping unit comprises an electronic oil pump and an electronic control device;
the electronic oil pump is installed at a bottom of the motor housing or the reducer housing, and the electronic control device is used to control the electronic oil pump to operate

Another aspect of the present disclosure provides an electric drive assembly using any one of the housing structures as described above.

The advantages and beneficial effects of the present disclosure are as follows.

In the housing structure of the present disclosure, by integrating at least two housings of the motor housing, the reducer housing, and the controller housing together, it is possible to significantly reduce the number of parts and the weight, improve overall stiffness, simplify manufacturing and assembly processes, avoid mechanical connections and contact seals, effectively reduce the vibration noise of the power assembly, and thus ensure or enhance the overall NVH (Noise, Vibration, Harshness) performance. In addition, by providing the oil cooling assembly and the water cooling assembly in the housing structure, it is possible to simultaneously achieve cooling of the motor, reducer, and controller, as well as lubrication of the motor and reducer, and thus increase cooling and lubrication efficiency.

### BRIEF DESCRIPTION OF DRAWINGS

By reading the detailed description of the preferred embodiments below, various other advantages and benefits will become clear to a person of ordinary skill in the art. The accompanying drawings are only used for the purpose of illustrating the preferred embodiments, and should not be considered as a limitation to the present disclosure. Moreover, throughout the drawings, the same reference numerals are used to denote the same components. In the drawings:
FIG. 1 is a perspective view of a housing structure from a first viewing angle in an embodiment of the present disclosure;
FIG. 2 is a perspective view of a housing structure from a second viewing angle in an embodiment of the present disclosure;
FIG. 3 is a left side view of a housing structure in an embodiment of the present disclosure;
FIG. 4 is a front view of a housing structure in an embodiment of the present disclosure;
FIG. 5 is a rear view of a housing structure in an embodiment of the present disclosure; and
FIG. 6 is a top view of a housing structure in an embodiment of the present disclosure.

In the drawings: 1. motor housing; 2. reducer housing; 3. controller housing; 4. motor rear cover; 5. reducer rear cover; 6. controller cover; 7. oil sub-passage; 8. first water passage.

### DETAILED DESCRIPTION

In order to make the object, technical solutions, and advantages of the present disclosure clearer, the present disclosure will be described clearly and completely in conjunction with the specific embodiments and corresponding drawings. Obviously, the embodiments described are only part of rather than all of the embodiments of the present disclosure. Based on the embodiments in the present disclosure, all other embodiments obtained by those of ordinary skill in the art without paying creative work shall fall within the protection scope of the present disclosure.

It should be understood that the terms "comprise/include", "consist of" or any other variants are intended to cover non-exclusive inclusion, so that the product, apparatus, process or method including a series of elements may not only include those elements, but may also include other elements not stated explicitly, or elements inherent to the product, apparatus, process or method. Without more limitations, an element defined by the phrase "comprise/include" or "consist of" does not exclude the case that there are other same elements in the product, apparatus, process or method including the element.

It should also be understood that, orientation or positional relationship indicated by the terms "upper", "lower", "front", "rear", "left", "right", "top", "bottom", "inside", "outside", etc. are orientation or positional relationship based on the drawings, which are merely for convenience of describing the present disclosure and simplifying the description, rather than indicating or implying that the device, component or structure referred to must have a specific orientation, or must be constructed and operated with a specific orientation, they should not be construed as limiting the present disclosure.

In this embodiment, the right is the front, and the left is the back.

In the present disclosure, unless otherwise expressly specified and defined, the terms "installed", "connected", "fixed" and the like should be understood in a broad sense, for example, it may be fixedly connected, or detachably connected, or integrated; it may also be mechanically connected or electrically connected; it may also be directly connected or indirectly connected through a middleware; it may also be internally communicated or interacted between two components. For a person of ordinary skill in the art, the specific meaning of these terms in the present disclosure should be understood according to specific situations.

The technical solutions provided by various embodiments of the present disclosure will be described in detail with reference to the accompanying drawings.

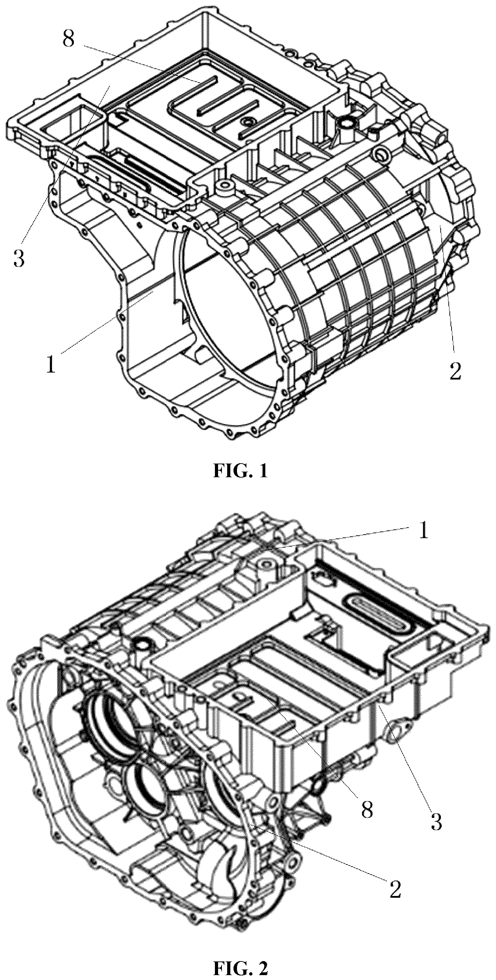

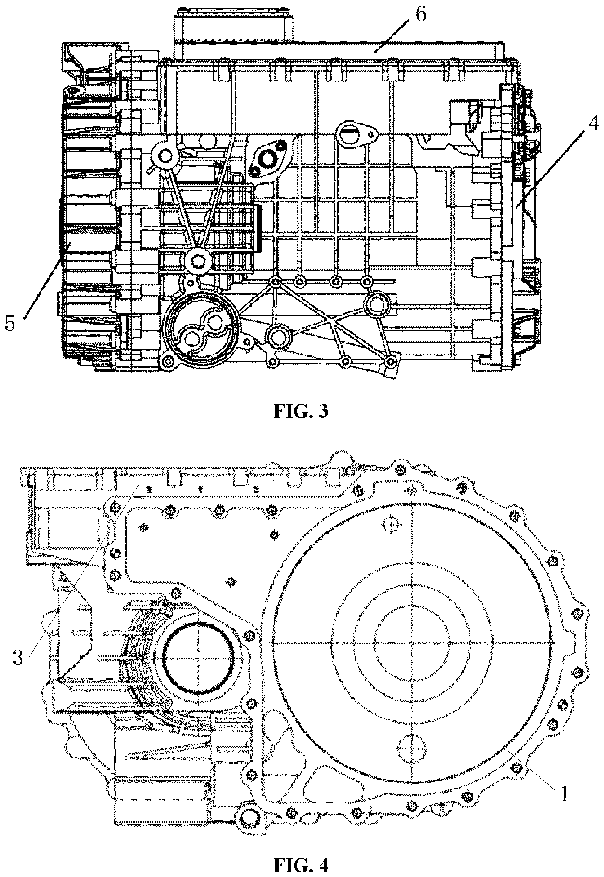

In an embodiment of the present disclosure, a housing structure of an electric drive assembly is provided, as shown in FIGS. 1 to 6. The housing structure comprises a motor housing 1, a reducer housing 2, a controller housing 3, an oil cooling assembly, and a water cooling assembly. The motor housing 1 is provided with a motor chamber, which is used to accommodate a stator, rotor, shaft, etc. of the motor and is enclosed by a motor rear cover 4. The reducer housing 2 is provided with a reducer chamber, which is used to accommodate a shaft, gear, etc. of the reducer and is enclosed by a reducer rear cover 5. The controller housing 3 is provided with a controller chamber, which is used to accommodate circuit boards, circuits, etc. and is enclosed by a controller cover 6.

Specifically, the motor housing, the reducer housing, and the controller housing are cast in an integrated structure, which not only reduces the number of parts and processing steps, avoids the coordination and connection between housings, but also avoids the need of providing sealing structures between housings, thereby reducing the overall weight of the electric drive assembly and achieving lightweight design. Moreover, multiple housings are integrated into a single structure, which can enhance the overall stiffness of the housing structure, improve the modal of the housing structure, and further effectively improve the vibration and noise performance of the electric drive assembly. In addition, the housing structure is easy to expand, and the length of the motor housing can be adjusted according to actual usage. The structure of the reducer housing and the controller housing can also be adjusted according to different usage situations, thereby enabling different configurations and layouts of the motor, reducer, and controller.

Further, the oil cooling assembly comprises an oil pumping unit and an oil passage. The oil passage is provided inside the motor housing and the reducer housing. The oil pumping unit is communicated with the oil passage and is used to pump lubricating oil in the reducer housing into the oil passage. Through the oil passage, the lubricating oil is transported to the structures inside the motor housing and the reducer housing that require cooling and lubrication, thereby cooling and lubricating the structures inside the motor housing and the reducer housing. After completing lubrication and cooling, the lubricating oil flows to the bottom of the motor housing and the reducer housing due to gravity, and because the motor housing is communicated with the reducer housing, the lubricating oil at the bottom of the motor housing will flow back to the bottom of the reducer housing.

The water cooling assembly comprises a water passage which is a circulating water channel provided inside the controller housing and inside the motor housing. The water passage is connected to a cooling water source of a vehicle to cool the controller and motor. The cooling water source of the vehicle is the vehicle's own water cooling system. The cooling water in the cooling water source circulates through the water passage in the controller housing and the motor housing and then returns to the cooling water source, which can take away the heat generated by the controller and motor.

In this embodiment, by providing the oil cooling assembly and water cooling assembly in the housing structure, it is possible to simultaneously achieve cooling of the motor, reducer, and controller, as well as lubrication of the motor and reducer, and thus increase cooling and lubrication efficiency of the electric drive assembly.

Further, due to the higher sensitivity of the controller to temperature, as shown in FIGS. 1 to 5, the controller housing 3 of this embodiment is located above the motor housing 1, which facilitates the cooling of the controller housing 3 by the water cooling assembly before the cooling of the motor housing 1. Moreover, the reducer housing 2 is located on the power output side of the motor housing 1, which makes the housing structure more compact.

Of course, in other embodiments of the present disclosure, two housings of the motor housing, the reducer housing, and the controller housing are in an integrated structure, which is also within the scope of protection of the present disclosure.

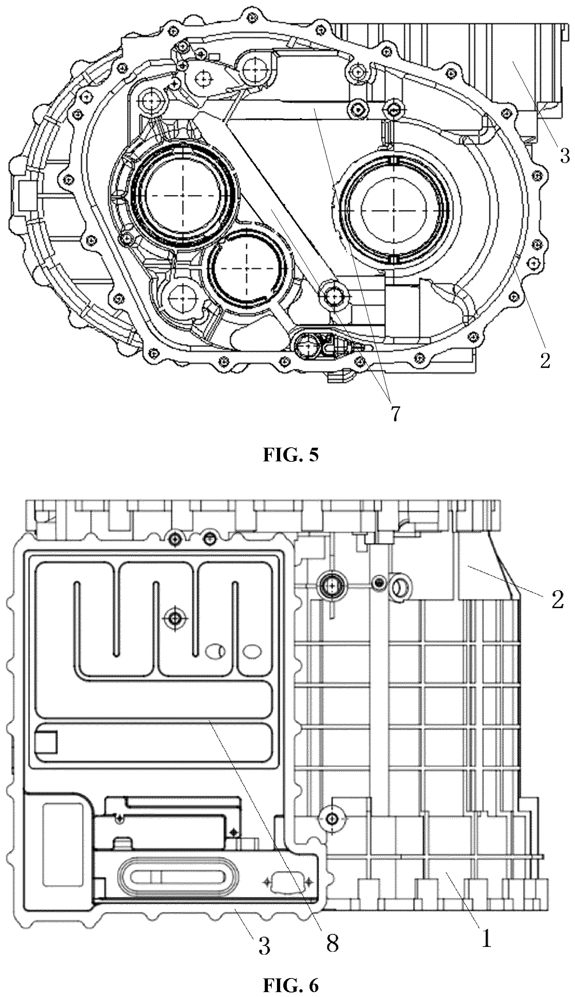

In an embodiment, as shown in FIG. 5, the oil passage comprises several oil sub-passages 7, which can be oil pipes or oil channels. When the oil sub-passages 7 are oil channels, the oil channels can be directly cast on the motor housing and the reducer housing. The oil outlet positions of the oil sub-passages 7 correspond respectively to the parts to be cooled and parts to be lubricated inside the motor housing, as well as the parts to be cooled and parts to be lubricated inside the reducer housing. The oil pumping unit pumps the lubricating oil in the reducer housing into the oil passage, and then conveys it to the parts to be cooled and lubricated through the oil sub-passages 7, thereby achieving targeted cooling and lubrication of the parts to be cooled and lubricated. In this way, the cooling and lubrication efficiency is higher, which can meet the cooling and lubrication needs of the electric drive assembly during long-term, high-power, high torque, and high-speed operation under various working conditions, and increase the reliability of the vehicle. The parts to be cooled comprise bearings, gears, motor coils, rotors, etc., while the parts to be lubricated comprise bearings, gears, oil seals, etc.

For example, the oil outlet position of one or more oil sub-passages corresponds to the motor coil, thereby achieving directional active cooling of the motor coil by lubricating oil, timely and quickly removing the heat generated by the motor coil during operation, avoiding or reducing early failure caused by excessively high working temperature of the motor under special working conditions, and improving the motor power density and overall efficiency.

In an embodiment, as shown in FIGS. 1, 2, and 6, the water passage comprises a first water passage 8 located at the bottom and/or the side wall of the controller housing, and a second water passage (not shown) located between the motor housing and the motor water jacket. The first water passage 8 and the second water passage are connected by a connecting water passage, so that the cooling water in the cooling water source flows back to the cooling water source through the first water passage 8, the connecting water passage, and the second water passage in sequence, thereby taking away the heat inside the controller housing and the motor housing. Of course, in other embodiments, the cooling water inside the cooling water source may also flow back to the cooling water source through the second water passage, the connecting water passage, and the first water passage in sequence.

Further, the first water passage is specifically formed by a water tank provided at the bottom of the controller housing and a sealing plate provided on the water tank. The water tank is provided in a zigzag manner at the bottom of the controller housing, which facilitates more uniform heat dissipation at the bottom of the controller housing. In addition, a sealing ring is provided between the water tank and the sealing cover plate to increase sealing.

In an embodiment, the oil cooling assembly further comprises a heat exchange unit.

Both the oil passage and the water passage are connected to the heat exchange unit, the heat exchange between the lubricating oil in the oil passage and the cooling water in the water passage is realized through the heat exchange unit, the cooling water takes away heat from the lubricating oil, thereby further improving the heat dissipation performance of the electric drive assembly.

In an embodiment, the housing structure further comprises an oil filtering assembly.

The oil filtering assembly is located at the bottom of the reducer housing, and the oil pumping unit is communicated with the reducer housing through the oil filtering assembly. The oil filtering assembly is used to filter the lubricating oil. Before entering the oil pumping assembly, the lubricating oil inside the reducer housing can be filtered by the oil filtering assembly to remove particles in the lubricating oil and prevent the particles from blocking the oil sub-passage which may affect the normal operation of the motor and reducer. The oil filtering assembly is located at the bottom of the reducer housing, which not only fully utilizes the space at the bottom of the reducer housing, but also allows the lubricating oil at the bottom of the reducer housing to enter the oil filtering assembly for filtration under the action of gravity.

Further, in order to prevent poor filtering effect of the oil filtering assembly due to long-term use, the oil filtering assembly is a detachable oil filter, and the filtering effect of the oil filtering assembly can be ensured by replacing the filter element.

In an embodiment, the oil pumping unit comprises an electronic oil pump and an electronic control device.

The electronic oil pump is installed at the bottom of the motor housing or the reducer housing, which can effectively save space. The electronic control device is used to control the operation of the electronic oil pump.

Moreover, the oil pumping unit is associated with several temperature sensors and speed sensors.

The temperature sensors are provided inside the motor housing and/or the reducer housing, and transmit the detected temperature to the electronic control device. The electronic control device controls the operation of the electronic oil pump based on the temperature detected by the temperature sensor. For example, a temperature sensor is provided at the motor coil to detect the temperature of the motor coil. When the temperature of the motor coil reaches a certain value, the electronic control device controls the electronic oil pump to work, thereby cooling the motor coil by pumping lubricating oil to the motor coil.

The speed sensors are used to detect the speed of the motor or the reducer, and transmit the detected speed to the electronic control device. The electronic control device controls the operation of the electronic oil pump according to the speed of the motor or the reducer. That is, when the speed of the motor or the reducer is higher than a preset value, the electronic control device controls the electronic oil pump to work to achieve cooling and lubrication of the electric drive assembly.

In another embodiment of the present disclosure, an electric drive assembly is disclosed, which uses the housing structure of any of the above embodiments. The electric drive assembly has the advantages of good cooling and lubrication performance and NVH performance, and can achieve high torque and high-speed output.

The above only describes the embodiments of the present disclosure, and is not intended to limit the scope of protection of the present disclosure. Any modification, equivalent substitution, improvement, expansion, etc. made in the spirit and principle of the present disclosure shall all fall within the protection scope of the present disclosure.

## Claims

1. A housing structure of an electric drive assembly, **characterized in that**: the housing structure comprises a motor housing (1), a reducer housing (2), a controller housing (3), an oil cooling assembly, and a water cooling assembly;
at least two housings of the motor housing (1), the reducer housing (2), and the controller housing (3) are in an integrated structure;
the oil cooling assembly comprises an oil pumping unit and an oil passage, the oil passage is provided inside the motor housing (1) and inside the reducer housing (2), the oil pumping unit is communicated with the oil passage and conveys lubricating oil in the reducer housing (2) to the oil passage; and
the water cooling assembly comprises a water passage which is a circulating water channel provided inside the controller housing (3) and inside the motor housing (1), and the water passage is connected to a cooling water source of a vehicle.

2. The housing structure according to claim 1, **characterized in that**: the motor housing (1), the reducer housing (2), and the controller housing (3) are in an integrated structure;
the controller housing (3) is located above the motor housing (1), and the reducer housing (2) is located on a power output side of the motor housing (1).

3. The housing structure according to claim 1, **characterized in that**: the oil passage comprises several oil sub-passages (7);
oil outlet positions of the oil sub-passages (7) correspond respectively to parts to be cooled and parts to be lubricated inside the motor housing (1) as well as parts to be cooled and parts to be lubricated inside the reducer housing (2).

4. The housing structure according to claim 1, **characterized in that**: the water passage comprises a first water passage (7) provided at a bottom and/or a side wall of the controller housing (3), and a second water passage provided between the motor housing (1) and a motor water jacket, and the first water passage (7) and the second water passage are connected by a connecting water passage.

5. The housing structure according to claim 4, **characterized in that**: cooling water inside the cooling water source flows back to the cooling water source through the first water passage (7), the connecting water passage, and the second water passage in sequence.

6. The housing structure according to claim 5, **characterized in that**: the first water passage (7) is formed by a water tank provided at the bottom of the controller housing (3) and a sealing plate provided on the water tank.

7. The housing structure according to claim 1, **characterized in that**: the oil cooling assembly further comprises a heat exchange unit;
both the oil passage and the water passage are communicated with the heat exchange unit, and heat exchange between the lubricating oil in the oil passage and the cooling water in the water passage is achieved by means of the heat exchange unit.

8. The housing structure according to any one of claims 1-7, further **characterized by** comprising an oil filtering assembly;
the oil filtering assembly is located at a bottom of the reducer housing (2), the oil pumping unit is communicated with the reducer housing (2) through the oil filtering assembly, and the oil filtering assembly is used for filtering lubricating oil.

9. The housing structure according to any one of claims 1-7, **characterized in that**: the oil pumping unit comprises an electronic oil pump and an electronic control device;
the electronic oil pump is provided at a bottom of the motor housing (1) or the reducer housing (2), and the electronic control device is used to control the electronic oil pump to operate.

10. An electric drive assembly using the housing structure according to any one of claims 1-9.
